# EUROPÄISCHE PATENTSCHRIFT

(11) **EP 2 129 726 B1**
(45) Veröffentlichungstag und Bekanntmachung des Hinweises auf die Patenterteilung: **12.01.2011**
(21) Anmeldenummer: 08716117.0
(22) Anmeldetag: 28.02.2008
(51) Int. Cl.: C09B 67/04, C09B 67/18, C09D 11/00

(54) **VERFAHREN ZUR HERSTELLUNG VON TRANSPARENTEM PIGMENT VIOLETT 23**
METHOD FOR PRODUCING TRANSPARENT PIGMENT VIOLET 23
PROCEDE DE PRODUCTION DE PIGMENT VIOLET 23 TRANSPARENT

(30) Priorität: 23.03.2007 DE 102007013962
(43) Veröffentlichungstag der Anmeldung: 09.12.2009
(73) Patentinhaber: Clariant Finance (BVI) Limited, Road Town, Tortola (VG)
(72) Erfinder: HOYER, Wolfgang, 60529 Frankfurt am Main (DE); UNVERDORBEN, Leonhard, 79713 Bad Säckingen (DE)
(74) Vertreter: Hütter, Klaus
(86) Internationale Anmeldenummer: PCT/EP2008/001590
(87) Internationale Veröffentlichungsnummer: WO 2008/116541

(56) Entgegenhaltungen:
- EP-A- 1 038 929
- EP-A- 1 411 092
- EP-A- 1 655 352
- US-A1- 2005 139 127

## Beschreibung

Beim Einsatz von Pigmenten zum Färben von hochmolekularen organischen Materialien werden hohe Anforderungen an die anwendungstechnischen Eigenschaften der Pigmente gestellt, wie hohe Farbstärken, leichte Dispergierbarkeit, hohe Buntheit (Chroma) und Reinheit des Farbtons und gute Licht- und Wetterechtheit. Wünschenswert ist eine möglichst universelle Einsetzbarkeit zum Färben von verschiedenen hochmolekularen Systemen wie Kunststoffen sowie wässrigen und lösemittelhaltigen Druckfarben und Lacken. Sowohl bei Lacken als auch bei Druckfarben geht der Trend hin zu hohen Pigmentkonzentrationen in der Anreibung, daher werden hochpigmentierte Lack- und Druckfarbenkonzentrate oder Mahlgüter (millbase) mit dennoch niedriger Viskosität gefordert, ebenso muss die Viskosität des fertigen Lackes oder der Druckfarbe anwendungsgerecht sein. Bei Druckfarben wird eine hohe Transparenz verlangt, in Lacksystemen sind einwandfreie Überlackierechtheiten und Lösemittelechtheiten, Beständigkeit gegen Alkali und Säure, und insbesondere im Falle von Metalliclackierungen hohe Transparenz und brillante Farbtöne gewünscht. Im Falle der Kunststoffeinfärbung wird hohe Ausblutechtheit, Hitzestabilität und gute Dispergierbarkeit verlangt, was z.B. in hohen Farbstärken zum Ausdruck kommt. Außerdem ist eine möglichst universelle Einsetzbarkeit in verschiedenen Systemen, beispielsweise in wässrigen und lösemittelhaltigen Systemen erwünscht.

C.I. Pigment Violet 23 (C.I. No. 51319, auch Carbazol Violet genannt, nachstehend kurz PV 23 genannt) ist ein wichtiges kommerzielles Pigment, das besonders in Druckfarben und neuerdings in Farbfiltern verwendet wird.

In der EP-B1-1 194 485 sowie der EP-A1-1411 091 wird ein transparentes und farbstarkes Pigment Violett 23 durch eine Salzknetung in Gegenwart einer organischen Flüssigkeit hergestellt. Als besonders bevorzugte organische Flüssigkeit wird Dimethylformamid genannt.

Dimethylformamid ist jedoch als giftig eingestuft und gehört zur der Kategorie von Stoffen, die als fruchtschädigend für den Menschen angesehen werden.

Es bestand daher der Bedarf nach einer ungefährlichen organischen Flüssigkeit, die bei einer Salzknetung eingesetzt und ein Pigment Violett 23 mit vergleichbar guten coloristischen Eigenschaften hervorbringt.
Es wurde gefunden, dass Propylencarbonat überraschenderweise diese Anforderungen erfüllt. Propylencarbonat ist auch unter dem Namen 4-Methyl-1,3-dioxolan-2-on oder Propylenglykolcarbonat bekannt.

Gegenstand der Erfindung ist ein Verfahren zur Herstellung von transparentem C.I. Pigment Violet 23 durch Salzknetung eines Pigment Violet 23-Crude in Gegenwart eines kristallinen, vorzugsweise anorganischen Salzes und einer organischen Flüssigkeit, **dadurch gekennzeichnet, dass** die organische Flüssigkeit Propylencarbonat ist.

Bei der erfindungsgemäßen Salzknetung wird ein Pigment Violett 23-Crude mit Propylencarbonat und mit dem kristallinen, vorzugsweise anorganischen Salz in Form einer knetbaren, hochviskosen Paste geknetet.

Als PV 23-Crude können kommerziell erhältliche Produkte eingesetzt werden, die meist nach der Methode in BIOS final report 960, Seite 75 hergestellt wurden. Als Ausgangsmaterial kann auch ein PV 23 gemäß JP-39/16786 oder JP52/935 eingesetzt werden.
Es ist auch möglich, das PV 23-Crude in amorpher Form bei der Salzknetung einzusetzen. Unter "amorph" versteht man einen Röntgenindex von kleiner als 2, bevorzugt zwischen 0 und 1,5. Um dies zu erreichen, kann das PV 23 Crude vor der Knetung einer trockenen Vorvermahlung mit Salz in einer geeigneten Mühle unterworfen werden. Das Salz kann dabei das gleiche wie bei der nachfolgenden Salzknetung sein.

Als kristalline Salze kommen Salze mit mono-, bi- oder trivalenten Metallkationen, wie beispielsweise Alkali-, Erdalkali- und Erdmetallionen, mit anorganischen Säuren, beispielsweise Salzsäure, Schwefelsäure oder Phosphorsäure, oder mit organischen Säuren mit 1 bis 6 Kohlenstoffatomen, beispielsweise Ameisensäure und Essigsäure, in Frage. Bevorzugte Salze sind Natriumformiat; Natrium- oder Calciumacetat; Natriumcitrat; Kaliumnatriumtartrat; Natrium-, Kalium-, Calcium-, Zink- oder Aluminiumchlorid; Natrium- oder Aluminiumsulfat; Calciumcarbonat; oder Mischungen dieser Salze, und insbesondere Natriumchlorid. Die Salze werden meist in größerer Menge eingesetzt, beispielsweise in mindestens 1- bis 10-facher, bevorzugt 2- bis 8-facher Menge, insbesondere 3- bis 6-facher Menge, bezogen auf das Gewicht des Pigment Violett 23. Auch größere Mengen können eingesetzt werden, sind jedoch unwirtschaftlich.
Handelsübliches Salz kann grobkörnig sein und kann vor dem Einsatz bei der Salzknetung durch eine Mahlung zerkleinert werden, z.B. auf eine mittlere Korngröße von 0,1 bis 1 mm. Besonders bevorzugt ist es, mikronisiertes Salz mit einer mittleren Korngröße von 5 bis 100 µm, insbesondere 10 bis 50 µm, einzusetzen.

Das Propylencarbonat kommt in solchen Mengen zum Einsatz, dass das Mahlgut eine zähe, teigige Masse bildet. Die eingesetzte Menge liegt erfahrungsgemäß zwischen der 0,05- bis 0,8-fachen Menge, bevorzugt zwischen der 0,1- bis 0,4-fachen, insbesondere zwischen der 0,12 bis 0,35-fachen Menge, bezogen auf das Gewicht der Pigment-Salz-Mischung.
Bei der Salzknetung können auch Säuren zum Einsatz kommen, insbesondere Säuren mit einem pK-Wert kleiner als 4,8. Bevorzugt können Phosphorsäure, Carbonsäuren, wie Essigsäure, Dodecylbenzolsulfonsäure und insbesondere Schwefelsäure eingesetzt werden.

Die Knetdauer kann von 30 Minuten bis 48 Stunden oder länger betragen, meist liegt sie im Bereich von 1 bis 24, insbesondere von 2 bis 8, Stunden.
Als Kneter kommen übliche kontinuierliche und diskontinuierliche, ein- oder mehrarmige Kneter in Betracht, bevorzugt zweiarmige diskontinuierliche Kneter, die möglichst hohe Scherkräfte auf die Knetmasse ausüben. Übliche Schaufelformen sind die Doppelmulden- (auch Sigma- oder Z-Schaufel genannt) oder die Mastikatorschaufel.

Die Knetung wird vorzugsweise bei einer Temperatur von -20 bis 200 °C, insbesondere 20 bis 170°C, besonders bevorzugt 50 bis 150 °C, durchgeführt. Falls erforderlich, kann während der Knetung auch gekühlt werden.
Falls erforderlich, kann während der Knetung durch weitere Zugabe von Propylencarbonat und/oder Salz die zähe Konsistenz der Knetmasse eingestellt bzw. konstant gehalten werden. Die Konsistenz der Knetmasse kann sich während des Knetens beispielsweise durch Verdampfen der organischen Flüssigkeit oder durch das Mahlen des Violett 23 zu kleineren Korngrößen ändern. Nach Beendigung der Knetung werden das eingesetzte Salz und das Propylencarbonat zweckmäßigerweise durch einen wässrigen Auszug (Suspendieren und Absaugen) bei saurem pH entfernt. Hierbei werden meist Säuren eingesetzt, die das Lösen des eingesetzten Salzes beschleunigen, wie beispielsweise Salz-, Schwefel- oder Essigsäure. Es wird meist ein pH kleiner 3, bevorzugt 1 bis 2 eingestellt, oder in 1 bis 10 gew.-%iger Säure ausgerührt.
Für den Auszug können auch organische Lösemittel zugesetzt werden.
Der Auszug kann bei beliebiger Temperatur durchgeführt werden, solange das Medium flüssig bleibt, ggf. auch über dem Siedepunkt der Mischung, meist bei Temperaturen zwischen 0 und 100 °C, insbesondere zwischen 60 °C und Siedetemperatur.

Das nach dem erfindungsgemäßen Verfahren hergestellte transparente Pigment Violett 23 kann mit den üblichen Methoden isoliert werden, beispielsweise durch Filtrieren, Dekantieren oder Zentrifugieren. Bevorzugt wird filtriert. Lösemittel können durch Waschen entfernt werden.

Vor, während und/oder nach Beendigung des erfindungsgemäßen Verfahrens können weitere Hilfsmittel zugesetzt werden, wie beispielsweise Tenside, nichtpigmentäre und pigmentäre Dispergiermittel, Füllstoffe, Stellmittel, Harze, Wachse, Entschäumer, Antistatika, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, Biocide, oder eine Kombination davon.

Als Tenside kommen anionische oder anionaktive, kationische oder kationaktive und nichtionische oder amphotere Substanzen oder Mischungen dieser Mittel in Betracht.

Mit nichtpigmentären Dispergiermitteln sind Substanzen gemeint, die strukturell nicht von organischen Pigmenten abgeleitet sind. Sie werden als Dispergiermittel oftmals bereits bei der Herstellung der Pigmente zugegeben.
Mit pigmentären Dispergiermitteln sind an sich bekannte Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder sulfosäureestergruppenhaltige Pigmentdispergatoren, Ether- oder thioethergruppenhaltige Pigmentdispergatoren, oder Carbonsäure-, Carbonsäureester- oder carbonamidgruppenhaltige Pigmentdispergatoren.
Im erfindungsgemäßen Verfahren können ein oder mehrere Pigmentdispergatoren in einer Gesamtmenge von 0,1 bis 25 Gew.-%, vorzugsweise 0,5 bis 20 Gew.-%, insbesondere 1,0 bis 17,5 Gew.-% bezogen auf das Gewicht des Pigment Violett 23 eingesetzt werden.

Anionische Gruppen der als Hilfsmittel eingesetzten nichtpigmentären und pigmentären Dispergatoren, Tenside oder Harze können auch mit 1-, 2- oder 3-wertigen Ionen als Salze vorliegen, insbesondere verlackt, beispielsweise durch Ca-, Mg-, Ba-, Sr-, Mn- oder Al-Ionen oder durch quaternäre Ammoniumionen. Mit Füllstoffen bzw. Extendern sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid.

Das erfindungsgemäße Verfahren liefert PV 23 in hochtransparenter Form und mit exzellenter Farbstärke. Das Pigment hat eine spezifische Oberfläche von 60 bis 150 m²/g, bevorzugt 80 bis 140 m²/g, gemessen nach BET.
In dem erfindungsgemäßen Salzknetprozess wird die Mehrzahl der Teilchen nicht in ihrer Größe verkleinert, sondern durch die Einwirkung von Scherkräften zwischen den Salzkristallen in Gegenwart der organischen Flüssigkeit in eine vorteilhafte Kristallform umgewandelt. Im Gegensatz zu vielen üblichen organischen Lösemitteln, wie z.B. Diethylenglykol, werden mit Propylencarbonat besonders gute Resultate erzielt.

Das erfindungsgemäß hergestellte Pigment Violett 23 kann in getrockneter fester Form, in rieselfähiger, pulverförmiger Beschaffenheit oder als Granulat, aber auch als beispielsweise wässriger Presskuchen in die vorgesehenen Anwendungsmedien eingearbeitet werden, wie z.B. in Kunststoffe, Druckfarben und Anstrichfarben, insbesondere aber in High-Tech-Anwendungen, wie Ink-Jet-Tinten, Farbfilter und elektrophotographische Toner und Entwickler.

### Beispiel 1

15 g kommerziell erhältliches Pigment Violett 23 Crude (Wuxi Xinguang Chemical Industry Co. Ltd) werden mit 90 g Natriumchlorid (< 30 Mikrometer) zwei mal 30 s in einer IKA Mühle gemischt. Dann wird die Mischung in einem Laborkneter (Werner & Pfleiderer) mit 30 g Propylencarbonat bei 80 °C 8 h bei 100 U/min geknetet. Anschließend wird die Knetmasse mit 800 ml 5 gew.-%iger Salzsäure versetzt, abgesaugt und mit E-Wasser gewaschen. Dann wird der Filterkuchen bei 80 °C im Trockenschrank getrocknet. Man erhält 14,6 g Pigment.

Die aus dem resultierenden Pigment hergestellte Druckfarbe zeigt nach der Prüfvorschrift PV 3/1 (Clariant International AG, Global Quality Assurance, Januar 2004) als Offset Druck ausgeprüft, eine Farbstärke von 100 % gegenüber dem Vergleich (Cromophtal^{®} Violett GT, Ciba).

### Vergleichsbeispiel 1

15 g kommerziell erhältliches Pigment Violett 23 Crude (Wuxi Xinguang Chemical Industry Co. Ltd) werden mit 90 g Natriumchlorid (< 30 Mikrometer) zwei mal 30 s in einer IKA Mühle gemischt. Dann wird die Mischung in einem Laborkneter (Werner & Pfleiderer) mit 30 g Diethylenglycol bei 80 °C 8 h bei 100 U/min geknetet. Anschließend wird die Knetmasse mit 800 ml 5 gew.-%iger Salzsäure versetzt, abgesaugt und mit E-Wasser gewaschen. Dann wird der Filterkuchen bei 80 °C. im Trockenschrank getrocknet. Man erhält 14,5 g Pigment.

Die aus dem resultierenden Pigment hergestellte Druckfarbe zeigt nach der Prüfvorschrift PV 3/1 (Clariant International AG, Global Quality Assurance, Januar 2004) als Offset Druck ausgeprüft nur eine Farbstärke von 75 % gegenüber dem Vergleich (Cromophtal Violett GT, Ciba).

## Patentansprüche

1. Verfahren zur Herstellung von transparentem C.I. Pigment Violet 23 durch Salzknetung eines Pigment Violet 23-Crude in Gegenwart eines kristallinen Salzes und einer organischen Flüssigkeit, **dadurch gekennzeichnet, dass** die organische Flüssigkeit Propylencarbonat ist.

2. Verfahren nach Anspruch 1, **dadurch gekennzeichnet, dass** ein kristallines Salz aus mono-, bi- oder trivalenten Metallkationen und anorganischen Säureresten, oder ein Gemisch solcher Salze eingesetzt werden.

3. Verfahren nach Anspruch 1 oder 2, **dadurch gekennzeichnet, dass** als kristallines Salz Natriumchlorid eingesetzt wird.

4. Verfahren nach einem oder mehreren der Ansprüche 1 bis 3, **dadurch gekennzeichnet, dass** das kristalline Salz mikronisiert ist.

5. Verfahren nach einem oder mehreren der Ansprüche 1 bis 4, **dadurch gekennzeichnet, dass** die Salzknetung bei einer Temperatur von 50 bis 150 °C durchgeführt wird.

6. Verfahren nach einem oder mehreren der Ansprüche 1 bis 5, **dadurch gekennzeichnet, dass** die eingesetzte Menge an Propylencarbonat zwischen der 0,05- und 0,8-fachen Menge, bezogen auf das Gewicht der Pigment-Salz-Mischung, liegt.

7. Verfahren nach Anspruch 6, **dadurch gekennzeichnet, dass** die eingesetzte Menge an Propylencarbonat zwischen der 0,12- und 0,35-fachen Menge, bezogen auf das Gewicht der Pigment-Salz-Mischung, liegt.

8. Verfahren nach einem oder mehreren der Ansprüche 1 bis 7, **dadurch gekennzeichnet, dass** das kristalline Salz in 1- bis 10-facher Menge, bezogen auf das Gewicht des Pigments, eingesetzt wird.

9. Verfahren nach einem oder mehreren der Ansprüche 1 bis 8, **dadurch gekennzeichnet, dass** nach Beendigung der Knetung Salz und Propylencarbonat durch einen wässrigen Auszug bei saurem pH entfernt werden.

10. Verfahren nach einem oder mehreren der Ansprüche 1 bis 9, **dadurch gekennzeichnet, dass** weitere Hilfsmittel aus der Gruppe der Tenside, nichtpigmentären und pigmentären Dispergiermittel, Füllstoffe, Stellmittel, Harze, Wachse, Entschäumer, Antistatika, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren und Biocide zugesetzt werden.

## Claims

1. A process for preparing transparent C.I. Pigment Violet 23 by salt kneading a crude Pigment Violet 23 in the presence of a crystalline salt and of an organic liquid wherein the organic liquid is propylene carbonate.

2. The process as claimed in claim 1 wherein the crystalline salt used is composed of mono-, bi- or trivalent metal cations and inorganic acid radicals or is a mixture of such salts.

3. The process as claimed in claim 1 or 2 wherein the crystalline salt is sodium chloride.

4. The process as claimed in one or more of claims 1 to 3 wherein the crystalline salt is a micronized crystalline salt.

5. The process as claimed in one or more of claims 1 to 4 wherein the salt kneading is carried out at a temperature of 50 to 150°C.

6. The process as claimed in one or more of claims 1 to 5 wherein the amount of propylene carbonate used is between 0.05 and 0.8 times the amount based on the weight of the pigment-salt mixture.

7. The process as claimed in claim 6 wherein the amount of propylene carbonate used is between 0.12 and 0.35 times the amount based on the weight of the pigment-salt mixture.

8. The process as claimed in one or more of claims 1 to 7 wherein the crystalline salt is used in 1 to 10 times the amount based on the weight of the pigment.

9. The process as claimed in one or more of claims 1 to 8 wherein salt and propylene carbonate are removed by aqueous extraction at acidic pH after kneading has ended.

10. The process as claimed in one or more of claims 1 to 9 wherein further, auxiliary agents are added from the group of surfactants, pigmentary and nonpigmentary dispersants, fillers, standardizers, resins, waxes, defoamers, antistats, antidusters, extenders, shading colorants, preservatives, dryness retarders, rheology control additives, wetters, antioxidants, UV absorbers, photostabilizers and biocides.

## Revendications

1. Procédé pour la préparation de pigment C.I. Pigment Violet 23 transparent par malaxage, avec un sel, d'un pigment brut Pigment Violet 23-Crude en présence d'un sel cristallin et d'un liquide organique, **caractérisé en ce que** le liquide organique est le carbonate de propylène.

2. Procédé selon la revendication 1, **caractérisé en ce qu'**on utilise un sel cristallin à base de cations métalliques mono-, di- ou trivalents et de restes d'acides inorganiques, ou un mélange de tels sels.

3. Procédé selon la revendication 1 ou 2, **caractérisé en ce qu'**on utilise comme sel cristallin le chlorure de sodium.

4. Procédé selon une ou plusieurs des revendications 1 à 3, **caractérisé en ce que** le sel cristallin est micronisé.

5. Procédé selon une ou plusieurs des revendications 1 à 4, **caractérisé en ce que** le malaxage avec un sel est effectué à une température de 50 à 150 °C.

6. Procédé selon une ou plusieurs des revendications 1 à 5, **caractérisé en ce que** la quantité utilisée de carbonate de propylène est comprise entre 0,05 et 0,8 fois la quantité par rapport au poids du mélange pigment-sel.

7. Procédé selon la revendication 6, **caractérisé en ce que** la quantité utilisée de carbonate de propylène est comprise entre 0,12 et 0,35 fois la quantité par rapport au poids du mélange pigment-sel.

8. Procédé selon une ou plusieurs des revendications 1 à 7, **caractérisé en ce que** le sel cristallin est utilisé en une quantité de 1 à 10 fois par rapport au poids du pigment.

9. Procédé selon une ou plusieurs des revendications 1 à 8, **caractérisé en ce qu'**après la fin du malaxage le sel et le carbonate de propylène sont éliminés par une extraction aqueuse à pH acide.

10. Procédé selon une ou plusieurs des revendications 1 à 9, **caractérisé en ce qu'**on ajoute d'autres adjuvants choisis dans le groupe des tensioactifs, des dispersants pigmentaires ou non pigmentaires, des charges, des fixateurs, des résines, des cires, des antimousses, des agents antistatiques, des agents anti-poussière, des diluants, des agents colorants pour le nuançage, des conservateurs, des ralentisseurs de séchage, des additifs pour le réglage de la rhéologie, des agents mouillants, des antioxydants, des absorbeurs UV, des photostabilisants et des biocides.
